# EUROPÄISCHE PATENTSCHRIFT

(11) **EP 3 628 030 B1**
(45) Veröffentlichungstag und Bekanntmachung des Hinweises auf die Patenterteilung: **07.07.2021**
(21) Anmeldenummer: 18723742.5
(22) Anmeldetag: 26.04.2018
(51) Int. Cl.: B23P 6/00, F01D 5/00, F01D 9/04, F01D 11/00, F01D 25/24

(54) **VERFAHREN ZUM INSTANDHALTEN EINER STRÖMUNGSMASCHINE**
METHOD FOR MAINTAINING A TURBOMACHINE
MÉTHODE DE MAINTENANCE D'UNE TURBOMACHINE

(30) Priorität: 08.05.2017 DE 102017207667
(43) Veröffentlichungstag der Anmeldung: 01.04.2020
(73) Patentinhaber: Siemens Energy Global GmbH & Co. KG, 81739 München (DE)
(72) Erfinder: AHMAD, Fathi, 41564 Kaarst (DE); KUHLEE, Matthias, 45472 Mülheim an der Ruhr (DE); RADULOVIC, Radan, 44799 Bochum (DE)
(86) Internationale Anmeldenummer: PCT/EP2018/060758
(87) Internationale Veröffentlichungsnummer: WO 2018/206306

(56) Entgegenhaltungen:
- EP-A1- 1 268 981
- DE-A1-102015 200 405
- US-A1- 2007 147 991
- US-B1- 6 173 491
- US-B1- 6 394 750

## Beschreibung

Die vorliegende Erfindung betrifft ein Verfahren zum Instandhalten einer axial durchströmten Strömungsmaschine, die eine Tragstruktur und mehrere axial benachbart angeordnete Leitschaufelkränze mit jeweils einer Vielzahl von Leitschaufeln aufweist, wobei die Leitschaufeln jeweils mit wenigstens einer Plattform versehen sind, die über Halteelemente an der Tragstruktur befestigt sind, wobei zueinander weisende Plattformstirnseiten axial benachbart angeordneter Leitschaufeln einander zugeordnete Dichtungsabschnitte aus einem metallischen Werkstoff definieren, die gemeinsam jeweils eine Dichtungsanordnung bilden.

Axial durchströmte Strömungsmaschinen sind im Stand der Technik in unterschiedlichsten Ausgestaltungen bekannt, insbesondere in Form von Turbinen. Sie umfassen mehrere axial benachbart angeordnete Leitschaufelkränze, die ein die Strömungsmaschine durchströmendes Medium jeweils in einem vorbestimmten Winkel auf einen zugeordneten, stromabwärts an einem Läufer gehaltenen Laufschaufelkranz richten.

An den Unterseiten der Plattformen der Leitschaufeln sind Halteelemente ausgebildet, über welche die Leitschaufeln an der Tragstruktur befestigt ist. Bei der Tragstruktur kann es sich um ein Gehäuse der Strömungsmaschine handeln. Alternativ kann aber auch eine separate, von dem Gehäuse umgebene Tragstruktur vorgesehen sein. Um zu verhindern, dass das die Strömungsmaschine durchströmende Medium den Strömungspfad, der radial außen durch die Plattformen der Leitschaufeln begrenzt ist, verlassen kann, sind axial benachbart angeordnete Leitschaufeln gegeneinander abgedichtet. Hierzu definieren die jeweils zueinander weisenden Stirnseiten axial benachbart angeordneter Leitschaufeln einander zugeordnete Dichtungsabschnitte aus einem metallischen Werkstoff, die jeweils gemeinsam eine Dichtungsanordnung bilden. Bei einem von der Siemens AG häufig eingesetzten älteren Design weisen die Dichtungsabschnitte beispielsweise jeweils einen sich in Umfangsrichtung erstreckenden und axial vorstehenden Vorsprung auf, der in eine zugeordnete, sich in Umfangsrichtung erstreckende Aussparung des anderen Dichtungsabschnittes eingreift.

Während des Betriebs einer Strömungsmaschine verschleißen deren Komponenten. Dies gilt insbesondere auch für die Leitschaufeln, die dem die Strömungsmaschine durchströmenden Medium und seiner Temperatur unmittelbar ausgesetzt sind. Defekte Leitschaufeln müssen entsprechend im Rahmen von Wartungsarbeiten repariert oder durch Ersatzleitschaufeln ersetzt werden. Für den letzteren Fall werden normalerweise Leitschaufeln bevorratet, bei denen das Design der Dichtungsabschnitte mit dem Design der Dichtungsabschnitte der in der Strömungsmaschine verbauten Leitschaufeln identisch ist.

Zur Verbesserung der Effizienz von Strömungsmaschinen ist man unter anderem bestrebt, Leckageverluste gering zu halten. Dies führt dazu, dass insbesondere die Dichtungsabschnitte bzw. die durch diese gebildeten Dichtungsanordnungen modifiziert werden. So sind heutzutage Strömungsmaschinen verschiedener Generationen im Einsatz, in denen Leitschaufeln verbaut sind, die grundsätzlich identische Abmessungen aufweisen, die sich jedoch hinsichtlich des Designs ihrer Dichtungsabschnitte voneinander unterscheiden. Dies führt dazu, dass alleine aufgrund verschieden ausgebildeter Dichtungsabschnitte für ältere Strömungsmaschinen andere Leitschaufeln als für jüngere Strömungsmaschinen zu bevorraten sind, obgleich die Abmessungen der Leitschaufeln im Übrigen identisch sind. Im Ergebnis geht die Bevorratung von Ersatzleitschaufeln mit sehr hohen Kosten einher.

Die US 6,173,491 B1 offenbart ein Verfahren zum Instandhalten einer axial durchströmten Strömungsmaschine, die eine Tragstruktur und mehrere axial benachbart angeordnete Leitschaufelkränze mit jeweils einer Vielzahl von Leitschaufeln aufweist, wobei die Leitschaufeln jeweils mit wenigstens einer Plattform versehen sind, die über Halteelemente an der Tragstruktur befestigt sind, wobei die defekten Leitschaufeln demontiert und eine Reparatur oder Nachrüstung defekter Laufschaufeln erfolgt und diese montiert werden.

Die WO 01/65073 A1 offenbart eine Turbinenanlage, bei der die Fußplatten von Leitschaufeln benachbarter Turbinenstufen über ein klammerartiges Dichtelement miteinander verbunden sind.

Die US 6,394,750 B1 offenbart ein Reparaturverfahren eines Drillings, bei dem ein beschädigter Abschnitt entfernt und entsprechend neu ersetzt wird.

Ausgehend von diesem Stand der Technik ist es eine Aufgabe der vorliegenden Erfindung, ein alternatives Verfahren der eingangs genannten Art zu schaffen.

Zur Lösung dieser Aufgabe schafft die vorliegende Erfindung ein Verfahren nach Anspruch 1, umfassend die Schritte:
a) Demontage einer auszutauschenden defekten Leitschaufel und zumindest einer axial benachbarten intakten Leitschaufel, mit der die auszutauschende Leitschaufel eine Dichtungsanordnung bildet, wobei die diese Dichtungsanordnung bildenden Dichtungsabschnitte jeweils einen sich in Umfangsrichtung erstreckenden und axial vorstehenden Vorsprung aufweisen, der in eine zugeordnete, sich in Umfangsrichtung erstreckende Aussparung des anderen Dichtungsabschnittes eingreift;
b) Bereitstellen einer die demontierte defekte Leitschaufel ersetzenden Ersatzleitschaufel, deren Plattform zumindest einen Ersatzdichtungsabschnitt aus einem metallischen Werkstoff definiert, wobei der zumindest eine Ersatzdichtungsabschnitt zwei sich in Umfangsrichtung erstreckende und axial vorstehende Vorsprünge gleicher Länge umfasst, die durch eine sich in Umfangsrichtung erstreckende Nut voneinander getrennt sind; und
c) Montage der demontierten intakten Leitschaufel und der Ersatzleitschaufel an der Tragstruktur, wobei der Dichtungsabschnitt der demontierten intakten Leitschaufel und der diesem zugewandte Ersatzdichtungsabschnitt der Ersatzleitschaufel über einen Dichtstreifen unter Ausbildung einer funktionsfähigen Dichtungsanordnung miteinander verbunden werden.

Bei dem erfindungsgemäßen Verfahren werden demnach Ersatzleitschaufeln verwendet, bei denen das Design der Ersatzdichtungsabschnitte nicht dem Design der Dichtungsabschnitte der in der Strömungsmaschine verbauten Leitschaufeln entspricht, sondern einem Design neuer Generation zur Herstellung einer Dichtungsanordnung mit verbesserter Dichtwirkung. Entsprechend kann die Anzahl von zu bevorratenden Ersatzleitschaufeln verringert werden, was mit einer erheblichen Kostenreduktion einhergeht. Im Gegenzug werden die entsprechenden Dichtungsabschnitte intakter Leitschaufeln, die axial benachbart zu defekten Laufschaufeln angeordnet sind, jeweils über einen Dichtstreifen an den zugeordneten Ersatzdichtungsabschnitt der Ersatzleitschaufel zur Herstellung einer funktionsfähigen Dichtungsanordnung angebunden.

Der Dichtstreifen ist bevorzugt aus Metall hergestellt.

Vorteilhaft weist zumindest eine Hauptfläche des Dichtstreifes eine geriffelte Oberfläche auf, wodurch eine verbesserte Dichtungswirkung erzielt werden kann.

Gemäß einer Ausgestaltung des erfindungsgemäßen Verfahrens wird der Dichtstreifen über mehrere Befestigungsmittel zumindest an dem Dichtungsabschnitt der demontierten intakten Leitschaufel befestigt, um eine sichere und dauerhafte Positionierung des Dichtstreifens zu gewährleisten, wobei es sich bei den Befestigungsmitteln insbesondere um Nieten handelt.

Gemäß einer Variante des erfindungsgemäßen Verfahrens wird der Dichtungsabschnitt der demontierten intakten Leitschaufel vor der Montage in Schritt c) derart bearbeitet, dass er entsprechend dem Ersatzdichtungsabschnitt zwei sich in Umfangsrichtung erstreckende und axial vorstehende Vorsprünge aufweist, die durch eine sich in Umfangsrichtung erstreckende Nut voneinander getrennt sind. Mit anderen Worten wird das Design des Dichtungsabschnitts der demontierten intakten Leitschaufel in das Design des Ersatzdichtungsabschnittes einer Ersatzleitschaufel durch entsprechende Bearbeitung überführt.

Die Bearbeitung des Dichtungsabschnittes der demontierten intakten Leitschaufel kann erfolgen, indem die Aussparung unter Materialauftrag verschlossen und anschließend die Nut eingebracht wird. Zum Verschließen der Aussparung kann insbesondere ein Auftragsschweiß- oder Spritzverfahren verwendet werden. Zur Ausbildung der Nut wird bevorzugt ein Erodierverfahren eingesetzt.

Alternativ kann die Bearbeitung des Dichtungsabschnittes der demontierten intakten Leitschaufel erfolgen, indem ein Teil des Dichtungsabschnittes entfernt und an dem verbleibenden Teil des Dichtungsabschnittes ein Ersatzstück befestigt wird, das die beiden Vorsprünge und die Nut definiert.

Weitere Merkmale und Vorteile der vorliegenden Erfindung werden anhand der nachfolgenden Beschreibung von Verfahren gemäß verschiedener Ausführungsformen der vorliegenden Erfindung unter Bezugnahme auf die beiliegende Zeichnung deutlich. Der Schutzumfang der vorliegenden Erfindung ist jedoch ausschließlich durch die nachfolgenden Ansprüche bestimmt.
Darin ist/sind
- Figur 1: eine geschnittene Teilansicht einer Strömungsmaschine gemäß einer Ausführungsform der vorliegenden Erfindung;
- Figur 2: eine perspektivische Ansicht einer Leitschaufel der in Figur 1 gezeigten Strömungsmaschine;
- Figur 3: eine vergrößerte Ansicht des in Figur 1 mit dem Bezugszeichen III gekennzeichneten Ausschnitts, der eine Dichtungsanordnung zeigt;
- Figur 4: eine perspektivische Ansicht einer Ersatzleitschaufel;
- Figur 5: eine Ansicht analog zu Figur 3, die eine zwischen axial benachbarten Ersatzleitschaufeln gebildete Dichtungsanordnung zeigt;
- Figuren 6-9: Ansichten, welche die in Figur 3 dargestellten Dichtungsabschnitte nach der Durchführung einzelner Bearbeitungsschritte zeigen;
- Figur 10: ein Ablaufdiagramm, das schematisch einzelne Schritte eines Instandhaltungsverfahrens gemäß einer Ausführungsform der vorliegenden Erfindung zeigt;
- Figuren 11 und 12: Ansichten, die eine alternative Bearbeitung eines der in Figur 3 dargestellten Dichtungsabschnitts zeigen; und
- Figur 13: eine Ansicht, die eine weitere Ausführungsform der erfindungsgemäßen Verfahrens zeigt.

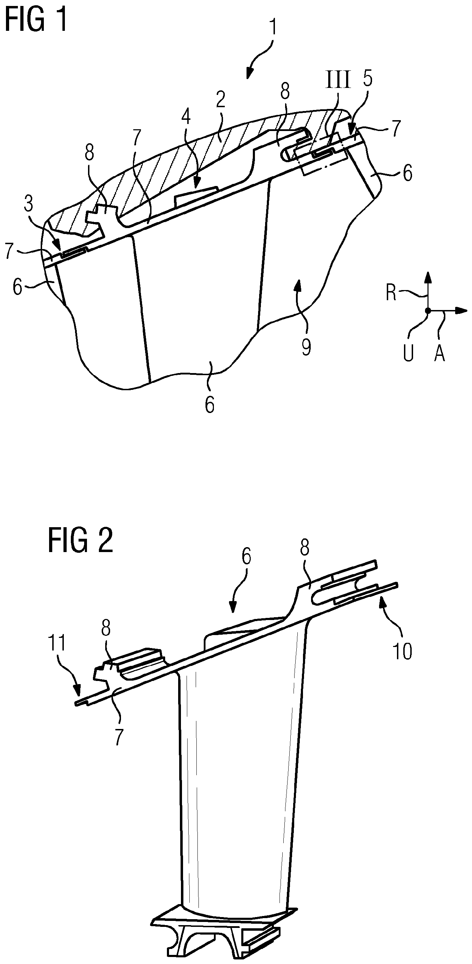

Figur 1 zeigt einen Ausschnitt einer axial durchströmten Strömungsmaschine 1, die eine Tragstruktur 2 und mehrere axial benachbart angeordnete Leitschaufelkränze 3, 4, 5 aufweist, die jeweils eine Vielzahl von Leitschaufeln 6 umfassen. Die Leitschaufeln 6 sind mit radial äußeren Plattformen 7 versehen, die über Halteelemente 8 an der Tragstruktur 2 befestigt sind und gemeinsam eine radial äußere Grenze eines ringförmigen Strömungskanals 9 der Strömungsmaschine 1 definieren. Um zu verhindern, dass ein den Strömungskanal 9 in axialer Richtung A durchströmendes Medium durch zwischen axial benachbart angeordneten Leitschaufeln 6 vorhandene Spalte entweicht, definieren die jeweils zueinander weisenden Plattformstirnseiten axial benachbart angeordneter Leitschaufeln 6 einander zugeordnete Dichtungsabschnitte 10 und 11 aus einem metallischen Werkstoff, die gemeinsam jeweils eine Dichtungsanordnung 12 bilden. Genauer gesagt weisen die Dichtungsabschnitte 10 und 11 vorliegend ein altes Design mit jeweils einem einzelnen, sich in Umfangsrichtung U erstreckenden und axial vorstehenden ringsegmentförmigen Vorsprung 13 auf, der in eine zugeordnete, sich in Umfangsrichtung U erstreckende ringsegmentförmige Aussparung 14 des axial gegenüber angeordneten Dichtungsabschnittes eingreift. Entsprechend wird eine Dichtungsanordnung 12 in Form eines einfachen Überlappungsbereiches gebildet, der das durch den Strömungskanal 9 strömende Fluid daran hindert, den Zwischenraum zwischen den Plattformen 7 axial benachbarter Leitschaufeln 6 ohne weiteres passieren zu können, wodurch Leckageverluste gering gehalten werden.

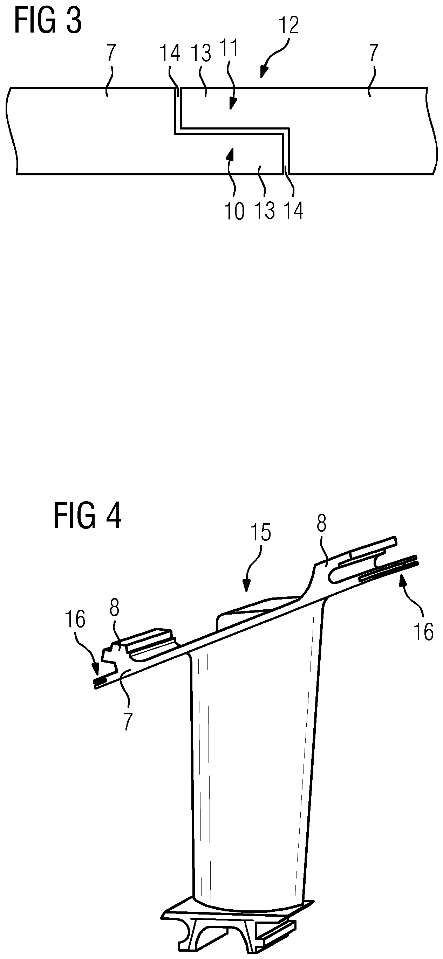

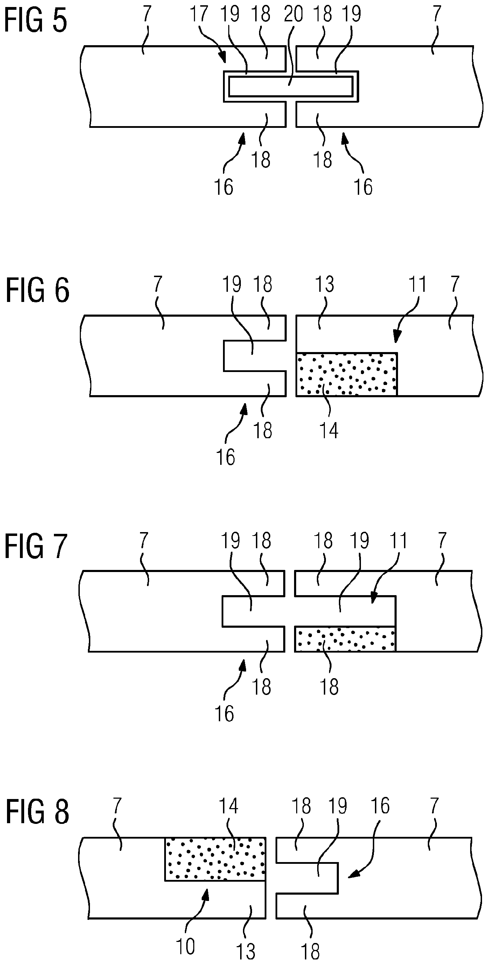

Figur 4 zeigt eine Ersatzleitschaufel 15 gemäß einer Ausführungsform der vorliegenden Erfindung. Die Ersatzleitschaufel 15 hat bezogen auf die vorbeschriebene Leitschaufel 6 im Wesentlichen identische Abmessungen. Sie unterscheidet sich lediglich hinsichtlich der Ausbildung ihrer Dichtungsabschnitte 16, die nachfolgend als Ersatzdichtungsabschnitte bezeichnet werden, sowie hinsichtlich der Dichtungsanordnung 17, die durch die Ersatzabschnitte 16 gebildet wird. Die axial einander gegenüber liegenden Ersatzdichtungsabschnitte 16 einer Plattform 7 der Ersatzleitschaufel 15 sind vorliegend identisch ausgebildet und umfassen ein neues, gegenüber den Dichtungsabschnitten 10 und 11 der Leitschaufeln 6 verbessertes Design mit jeweils zwei sich in Umfangsrichtung U erstreckenden und axial vorstehenden ringsegmentförmigen Vorsprüngen 18, die durch eine sich in Umfangsrichtung U erstreckende Nut 19 voneinander getrennt sind. Zur Ausbildung der in Figur 5 dargestellten verbesserten Dichtungsanordnung 17 wird zwischen den Ersatzdichtungsabschnitten 16 axial benachbarter Ersatzleitschaufeln 15 ein Dichtstreifen 20 eingesetzt, der jeweils in die axial einander gegenüber liegenden Nuten 19 der Ersatzdichtungsabschnitte 16 eingreift, siehe insbesondere Figur 5.

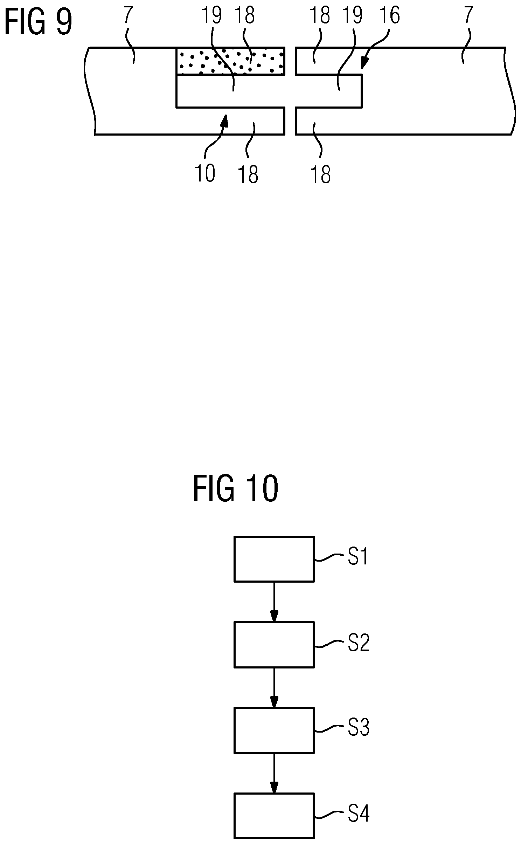

Ist eine Leitschaufel 6 der Strömungsmaschine 1 defekt, so wird diese gemäß einem Instandhaltungsverfahren gemäß einer Ausführungsform der vorliegenden Erfindung in einem ersten Schritt S1 demontiert, siehe Figur 10. Zudem wird zumindest eine axial benachbart angeordnete intakte Leitschaufel 6 ausgebaut, mit der die auszutauschende defekte Leitschaufel eine Dichtungsanordnung 12 bildet.

In einem sich anschließenden Schritt S2 wird eine Ersatzleitschaufel 15 bereitgestellt, welche die demontierte defekte Leitschaufel 6 ersetzen soll.

Aufgrund der Tatsache, dass sich das alte Design der Dichtungsabschnitte 10 bzw. 11 der noch intakten Leitschaufeln 6 von dem neuen Design der Ersatzdichtungsabschnitte 16 der Ersatzleitschaufel 15 unterscheidet, ist ein unmittelbarer Einbau der Ersatzleitschaufel 15 nicht möglich, da keine funktionsfähige Dichtungsanordnung hergestellt werden kann. Entsprechend wird gemäß einer ersten Variante des erfindungsgemäßen Verfahrens derjenige Dichtungsabschnitt 10 bzw. 11 der demontierten intakten Leitschaufel 6, der im eingebauten Zustand zur Ersatzleitschaufel 15 weisen wird, in Schritt S3 einer Bearbeitung unterzogen. Zu diesem Zweck wird die Aussparung 14 des entsprechenden Dichtungsabschnittes 10 bzw. 11, wie es in den Figuren 6 und 8 dargestellt ist, in einem ersten Schritt unter Materialauftrag verschlossen, wozu beispielsweise ein Auftragsschweiß- oder Spritzverfahren eingesetzt werden kann. In einem weiteren Schritt wird eine Nut 19 stirnseitig unter Einsatz eines Erodierverfahrens eingebracht, wodurch zeitgleich Vorsprünge 18 erzeugt werden, siehe hierzu die Figuren 7 und 9. Somit wird ein Design analog zum Ersatzdichtungsabschnitt 16 geschaffen.

In einem weiteren Schritt S4 werden die bearbeitete intakte Leitschaufel 6 und die Ersatzleitschaufel 15 in der Tragstruktur 2 unter Ausbildung einer funktionsfähigen Dichtungsanordnung 17 an der Tragstruktur 2 der Strömungsmaschine 1 montiert, wozu ein metallischer Dichtstreifen 20 in die einander gegenüber angeordneten Nuten 19 analog zu Figur 5 eingesetzt wird, dessen Länge der Länge etwa der Länge des Ersatzdichtungsabschnitts 16 in Umfangsrichtung U entspricht. Auf diese Weise wird eine labyrinthartige Dichtung mit gegenüber der Dichtungsanordnung 12 verbesserter Dichtwirkung erzielt.

Es sollte klar sein, dass, wenn eine defekte Leitschaufel 6 zwei axial unmittelbar benachbart angeordnete intakte Leitschaufeln 6 aufweist, beide intakte Leitschaufeln 6 in Schritt S1 demontiert, in Schritt S3 bearbeitet und in Schritt S4 unter Ausbildung einer funktionsfähigen Dichtungsanordnung 17 neueren Designs montiert werden.

Ein wesentlicher Vorteil des zuvor beschriebenen Verfahrens besteht darin, dass zum Instandhalten der Strömungsmaschine 1 nur Ersatzleitschaufeln 15 bevorratet werden müssen, deren Ersatzdichtungsabschnitte 16 gegenüber den Dichtungsabschnitten 10 bzw. 11 der Leitschaufeln 6 ein neueres und verbessertes Design aufweisen. Eine Bevorratung von Leitschaufeln 6, deren Dichtungsabschnitte 10, 11 das alte Design aufweisen, ist hingegen nicht erforderlich. Ein weiterer Vorteil besteht darin, dass beim Austausch defekter Leitschaufeln 6 zeitgleich alte Dichtungsanordnungen 12 durch neue Dichtungsanordnungen 17 ersetzt werden, wodurch die Leckageverluste weiter verringert werden, was mit einer Leistungssteigerung der Strömungsmaschine 1 einhergeht.

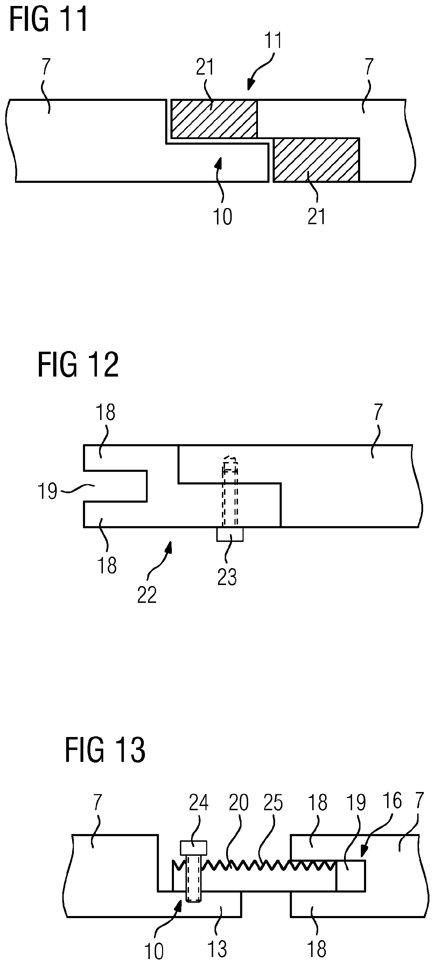

Die Figuren 11 und 12 zeigen eine alternative Bearbeitung eines Dichtungsabschnittes 11 einer demontierten und intakten Leitschaufel 6 in Schritt S3. Hier werden zunächst die in Figur 11 schraffiert gezeichneten Bereiche 21 entfernt, beispielsweise im Rahmen einer Fräsbearbeitung, woraufhin ein die Vorsprünge 18 und die Nut 19 definierendes Zusatzteil 22 an dem verbleibenden Teil des Dichtungsabschnittes 11 befestigt wird, vorliegend unter Verwendung von Befestigungsschrauben 23.

Figur 13 zeigt eine Variante des erfindungsgemäßen Verfahrens, bei dem der in Figur 10 dargestellte Schritt S3 vollständig entfallen kann. Bei dieser Variante wird in Schritt S4 der Spalt zwischen einem Dichtungsabschnitt 10, 11 alten Designs einer demontierten intakten Leitschaufel 6 und einem Ersatzdichtungsabschnitt 16 einer Ersatzleitschaufel 15 durch einen Dichtstreifen 20 abgedichtet, der mit Befestigungsmitteln 24 an dem Dichtungsabschnitt 10, 11 befestigt wird, wobei es sich bei den Befestigungsmitteln 24 um Nieten handeln kann, um nur ein Beispiel zu nennen. Zumindest eine Hauptfläche des Dichtstreifens 20 kann mit einer geriffelten Oberfläche 25 versehen sein, insbesondere die dem Strömungskanal 9 abgewandte Hauptfläche.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher ausschließlich durch die nachfolgenden Ansprüche bestimmt ist.

## Patentansprüche

1. Verfahren zum Instandhalten einer axial durchströmten Strömungsmaschine (1), die eine Tragstruktur (2) und mehrere axial benachbart angeordnete Leitschaufelkränze (3, 4, 5) mit jeweils einer Vielzahl von Leitschaufeln (6) aufweist,
wobei die Leitschaufeln (6) jeweils mit wenigstens einer Plattform (7) versehen sind, die über Halteelemente (8) an der Tragstruktur (2) befestigt sind,
wobei zueinander weisende Plattformstirnseiten axial benachbart angeordneter Leitschaufeln (6) einander zugeordnete Dichtungsabschnitte (10, 11) aus einem metallischen Werkstoff definieren, die gemeinsam jeweils eine Dichtungsanordnung (12) bilden, umfassend die Schritte:
a) Demontage einer auszutauschenden defekten Leitschaufel (6) und zumindest einer axial benachbarten intakten Leitschaufel (6), mit der die auszutauschende Leitschaufel (6) eine Dichtungsanordnung (12) bildet, wobei die diese Dichtungsanordnung (12) bildenden Dichtungsabschnitte (10, 11) jeweils einen sich in Umfangsrichtung (U) erstreckenden und axial vorstehenden Vorsprung (13) aufweisen, der in eine zugeordnete, sich in Umfangsrichtung (U) erstreckende Aussparung (14) des anderen Dichtungsabschnittes (11, 10) eingreift;
b) Bereitstellen einer die demontierte defekte Leitschaufel (6) ersetzenden Ersatzleitschaufel (15), deren Plattform (7) zumindest einen Ersatzdichtungsabschnitt (16) aus einem metallischen Werkstoff definiert, wobei der zumindest eine Ersatzdichtungsabschnitt (16) zwei sich in Umfangsrichtung (U) erstreckende und axial vorstehende Vorsprünge (18) gleicher Länge umfasst, die durch eine sich in Umfangsrichtung (U) erstreckende Nut (19) voneinander getrennt sind; und
c) Montage der demontierten intakten Leitschaufel (6) und der Ersatzleitschaufel (15) an der Tragstruktur (2), wobei der Dichtungsabschnitt der demontierten intakten Leitschaufel (6) und der diesem zugewandte Ersatzdichtungsabschnitt (16) der Ersatzleitschaufel (15) über einen Dichtstreifen (20) unter Ausbildung einer funktionsfähigen Dichtungsanordnung (17) miteinander verbunden werden.

2. Verfahren nach Anspruch 1,
**dadurch gekennzeichnet, dass**
der Dichtstreifen (20) aus Metall hergestellt ist.

3. Verfahren nach Anspruch 1 oder 2,
**dadurch gekennzeichnet, dass**
zumindest eine Hauptfläche des Dichtstreifes (20) eine geriffelte Oberfläche (25) aufweist.

4. Verfahren nach einem der vorhergehenden Ansprüche,
**dadurch gekennzeichnet, dass**
der Dichtstreifen (20) über mehrere Befestigungsmittel (24) zumindest an dem Dichtungsabschnitt (10, 11) der demontierten intakten Leitschaufel (6) befestigt wird,
wobei es sich bei den Befestigungsmitteln (24) insbesondere um Nieten handelt.

5. Verfahren nach einem der vorhergehenden Ansprüche,
**dadurch gekennzeichnet, dass**
der Dichtungsabschnitt (10, 11) der demontierten intakten Leitschaufel (6) vor der Montage in Schritt c) derart bearbeitet wird, dass er entsprechend dem Ersatzdichtungsabschnitt (16) zwei sich in Umfangsrichtung (U) erstreckende und axial vorstehende Vorsprünge (18) aufweist, die durch eine sich in Umfangsrichtung (U) erstreckende Nut (19) voneinander getrennt sind.

6. Verfahren nach Anspruch 5,
**dadurch gekennzeichnet, dass**
die Bearbeitung des Dichtungsabschnittes (10, 11) der demontierten intakten Leitschaufel (6) in Schritt c) erfolgt, indem die Aussparung (14) unter Materialauftrag verschlossen und anschließend die Nut (19) eingebracht wird.

7. Verfahren nach Anspruch 6,
**dadurch gekennzeichnet, dass**
zum Verschließen der Aussparung (14) ein Auftragsschweiß- oder Spritzverfahren verwendet wird.

8. Verfahren nach Anspruch 6 oder 7,
**dadurch gekennzeichnet, dass**
zur Ausbildung der Nut (19) ein Erodierverfahren eingesetzt wird.

9. Verfahren nach Anspruch 5,
**dadurch gekennzeichnet, dass**
die Bearbeitung des Dichtungsabschnittes (10, 11) der demontierten intakten Leitschaufel (6) erfolgt, indem ein Teil des Dichtungsabschnittes (10, 11) entfernt und an dem verbleibenden Teil des Dichtungsabschnittes (10, 11) ein Ersatzstück (22) befestigt wird, das die beiden Vorsprünge (18) und die Nut (19) definiert.

## Claims

1. Method for maintaining an axial-flow turbomachine (1), which has a support structure (2) and a plurality of axially adjacent guide vane rings (3, 4, 5), each having a multiplicity of guide vanes (6),
wherein the guide vanes (6) are each provided with at least one platform (7), which is fastened to the support structure (2) by means of retaining elements (8),
wherein mutually facing platform end faces of axially adjacent guide vanes (6) define mutually associated seal sections (10, 11) made of a metal material, which in each case jointly form a seal assembly (12), comprising the following steps:
a) removal of a defective guide vane (6) to be replaced and of at least one axially adjacent intact guide vane (6) with which the guide vane (6) to be replaced forms a seal assembly (12), wherein the seal sections (10, 11) forming this seal assembly (12) each have a projection (13) which extends in the circumferential direction (U), projects axially and engages in an associated recess (14) in the other seal section (11, 10), said recess extending in the circumferential direction (U);
b) making available a replacement guide vane (15) replacing the removed defective guide vane (6), the platform (7) of which replacement guide vane defines at least one replacement seal section (16) made from a metal material, wherein the at least one replacement seal section (16) comprises two axially projecting projections (18) of equal length which extend in the circumferential direction (U) and are separated from one another by a groove (19) extending in the circumferential direction (U); and
c) mounting the removed intact guide vane (6) and the replacement guide vane (15) on the support structure (2), wherein the seal section of the removed intact guide vane (6) and the facing replacement seal section (16) of the replacement guide vane (15) are connected to one another by a sealing strip (20) to form a functional seal assembly (17) .

2. Method according to Claim 1,
**characterized in that**
the sealing strip (20) is produced from metal.

3. Method according to Claim 1 or 2,
**characterized in that**
at least one main surface of the sealing strip (20) has a ridged surface (25).

4. Method according to any one of the preceding claims,
**characterized in that**
the sealing strip (20) is fastened by means of a plurality of fastening means (24) at least to the seal section (10, 11) of the removed intact guide vane (6),
wherein, in particular, the fastening means (24) are rivets.

5. Method according to any one of the preceding claims,
**characterized in that**
the seal section (10, 11) of the removed intact guide vane (6) is machined in such a way before mounting in step c) that, in a manner corresponding to the replacement seal section (16), it has two projections (18) which extend in the circumferential direction (U), project axially and are separated from one another by a groove (19) extending in the circumferential direction (U).

6. Method according to Claim 5,
**characterized in that**
the machining of the seal section (10, 11) of the removed intact guide vane (6) is performed in step c) by closing the recess (14) by the application of material and then introducing the groove (19).

7. Method according to Claim 6,
**characterized in that**
a deposition welding or spraying method is used to close the recess (14).

8. Method according to Claim 6 or 7,
**characterized in that**
an erosion method is used to form the groove (19).

9. Method according to Claim 5,
**characterized in that**
the machining of the seal section (10, 11) of the removed intact guide vane (6) is performed by removing part of the seal section (10, 11) and fastening a replacement piece (22) to the remaining part of the seal section (10, 11), said piece defining the two projections (18) and the groove (19).

## Revendications

1. Procédé de maintien en bon état d'une turbomachine (1) parcourue axialement, qui a une structure (2) porteuse et plusieurs couronnes (3, 4, 5) d'aubes directrices montées voisines axialement et ayant chacune une pluralité d'aubes (6) directrices, dans lequel les aubes (6) directrices sont pourvues chacune d'au moins une plateforme (7), qui sont fixées à la structure (2) porteuse par des éléments (8) de retenue,
dans lequel des côtés frontaux de plateforme, tournés l'un vers l'autre, d'aubes (6) directrices disposées en étant voisines axialement définissent des parties (10, 11) d'étanchéité en un matériau métallique associées l'une à l'autre, qui forment conjointement respectivement un agencement (12) d'étanchéité, comprenant les stades :
a) démontage d'une aube (6) directrice défectueuse à remplacer et au moins d'une aube (6) directrice intacte voisine axialement avec laquelle l'aube (6) directrice à remplacer forme un agencement (12) d'étanchéité, les parties (10, 11) d'étanchéité formant cet agencement (12) d'étanchéité ayant respectivement une saillie (13) s'étendant dans la direction (U) du pourtour et en saillie axialement, qui pénètre dans un évidement (14), associé, s'étendant dans la direction (U) du pourtour, de l'autre partie (11, 10) d'étanchéité ;
b) mise à disposition d'une aube (15) directrice de remplacement, qui remplace l'aube (6) directrice défectueuse démontée et dont la plateforme définit au moins une partie (16) d'étanchéité de remplacement en un matériau métallique, la au moins une partie (16) d'étanchéité de remplacement comprenant deux saillies (18) de même longueur, s'étendant dans la direction (U) de pourtour et en saillie axialement, qui sont séparées l'une de l'autre par une rainure (19) s'étendant dans la direction (U) du pourtour ; et
c) montage de l'aube (6) directrice intacte démontée et de l'aube (15) directrice de remplacement sur la structure (2) porteuse, la partie d'étanchéité de l'aube (6) directrice intacte démontée et la partie (16) d'étanchéité de remplacement, tournée vers celle-ci, de l'aube (15) directrice de remplacement étant reliées l'une à l'autre par une bande (20) d'étanchéité en formant un agencement (17) d'étanchéité apte à fonctionner.

2. Procédé suivant la revendication 1,
**caractérisé en ce que**
la bande (20) d'étanchéité est en métal.

3. Procédé suivant la revendication 1 ou 2,
**caractérisé en ce que**
au moins une surface principale de la bande (20) d'étanchéité est une surface (25) rainurée.

4. Procédé suivant l'une des revendications précédentes,
**caractérisé en ce que**
on fixe la bande (20) d'étanchéité par plusieurs moyens (24) de fixation au moins à la partie (10, 11) d'étanchéité de l'aube (16) directrice intacte démontée,
les moyens (24) de fixation étant notamment des rivets.

5. Procédé suivant l'une des revendications précédentes,
**caractérisé en ce que**
avant le montage dans le stade c) on usine la partie (10, 11) d'étanchéité de l'aube (6) directrice intacte démontée de manière à ce qu'elle ait, conformément à la partie (16) d'étanchéité de remplacement, deux saillies (18) s'étendant dans la direction (U) de pourtour et en saillie axialement, qui sont séparées l'une de l'autre par une rainure (19) s'étendant dans la direction (U) du pourtour.

6. Procédé suivant la revendication 5,
**caractérisé en ce que**
l'usinage de la partie (10, 11) d'étanchéité de l'aube (6) directrice intacte démontée s'effectue au stade c) en fermant l'évidement (14) avec dépôt de matière et en ménageant ensuite la rainure (19).

7. Procédé suivant la revendication 6,
**caractérisé en ce que**
pour ferme l'évidement (14), on utilise un procédé de soudure avec apport ou un procédé de pulvérisation.

8. Procédé suivant la revendication 6 ou 7,
**caractérisé en ce que**
on utilise un procédé d'érosion pour constituer la rainure (19).

9. Procédé suivant la revendication 5,
**caractérisé en ce que**
l'usinage de la partie (10, 11) d'étanchéité de l'aube (6) directrice intacte démontée s'effectue en éliminant une partie de la partie (10, 11) d'étanchéité et en fixant à la partie restante de la partie (10, 11) d'étanchéité une pièce (22) de remplacement, qui définit les deux saillies (18) et la rainure (19).
